# EUROPÄISCHE PATENTANMELDUNG

(11) **EP 0 716 979 A2**
(43) Veröffentlichungstag der Anmeldung: **19.06.1996**
(21) Anmeldenummer: 95119433.1
(22) Anmeldetag: 09.12.1995
(51) Int. Cl.: B64D 1/16

(54) **Gerät zum Ausbringen von Streugut**

(30) Priorität: 12.12.1994 DE 4444127; 12.12.1994 DE 4444128; 12.12.1994 DE 4444129; 18.09.1995 DE 19534565
(71) Anmelder: Folger, Wolfgang, D-68766 Hockenheim (DE)
(72) Erfinder: Folger, Wolfgang, D-68766 Hockenheim (DE)
(74) Vertreter: Kammer, Arno, Dipl.-Ing.

(57) **Zusammenfassung**

Es wird ein am Lasthaken eines Hubschraubers mitgeführtes beim Aufsetzen auf den Boden auf drei Beinen (1) stehendes Gerät zum Ausbringen von Streugut beschrieben.
Das Gerät weist einen sich nach unten verjüngenden Behälter (3) mit einer Öffnung am unteren Ende und eine Streuscheibe auf, die sich ein Betrieb unterhalb der Öffnung dreht. Der Behälter ist am oberen Ende mit einem Ring (2) oder dgl. verbunden. Die Beine sind am oberen Ende lösbar mit dem Ring verbunden. In der Nähe des unteren Endes der Beine sind zwischen diesen verlaufende Stützteile (4) vorgesehen, mit denen die Beine lösbar verbunden sind. Die Verbindung von Ring, Beinen und Stützteilen wird mittels zwischen benachbart liegenden Beinen gespannten, schräg verlaufenden Spannseilen (9) bewirkt.

## Beschreibung

Die Erfindung betrifft ein am Lasthaken eines Hubschraubers über Seile mitzuführendes Gerät zum Ausbringen von Streugut. Das Gerät weist einen sich nach unten verjüngenden Behälter (Kegelabschnitt) für das Streugut auf. An dessen unterem Ende befindet sich eine Öffnung. Außerdem sind drei Beine vorgesehen, auf denen der Behälter z.B. beim Füllen steht. Unterhalb der Öffnung befindet sich eine motorgetriebene Streuscheibe, die sich im Betrieb dreht und das auf sie auftreffende Streugut horizontal verteilt.
Der Behälter ist am oberen Ende mit einem Ring oder dgl. verbunden, und die Beine sind mit ihrem oberen Ende lösbar mit dem Ring verbunden. In der Nähe des unteren Endes der Beine sind zwischen diesen verlaufende Stützteile vorgesehen, mit denen die Beine lösbar verbunden sind.
Ein solches Gerät ist aus dem englisch-sprachigen Abstract der JP 53-69175 A 2 bekannt. Dort sind der Ring, die Beine und die Stützteile über Verbindungsteile zwar lösbar, jedoch durch Verschraubungen starr miteinander verbunden.
Am unteren Drittel des Behälters ist meist eine Rütteleinrichtung angebracht, welcher die Aufgabe zukommt, nicht von selbst rieselfähiges Material zum Fließen zu bringen.
Solche Geräte werden z.B. für folgende Anwendungen eingesetzt:
- **Kalkung** von Wäldern / Wassereinzugsgebieten zum Schutze der Böden und der Kulturen gegen die zunehmende Bodenversauerung.
- **Düngung** in Land-, Forstwirtschaft, Weinbau.
- Ausbringung von Ölbindemitteln und anderen festen Stoffen, welche aus der Luft gleichmäßig verteilt werden sollen.

Bei den aufgeführten Beispielen des nachfolgenden Textes wird auf die Kalkung abgehoben, da diese Verwendung in jeder Hinsicht die härtesten Anforderungen stellt, und auf Grund ihres Umfanges die größte wirtschaftliche Bedeutung innehat.

Die Anforderungen an ein solches Gerät ergeben sich aus dem folgenden Anforderungskatalog.

### Anforderungskatalog

Die nachfolgenden Anforderungen 1. bis 4. an das Streugerät stehen unter zwei gleichermaßen bedeutsamen Prämissen:

| **A** | **B** |
|---|---|
| **geringes Eigengewicht** | Fähigkeit zur Verarbeitung: **aller** in Frage kommenden Streugüter in **denkbar ungünstigem Zustand** (wie z.B. offener Umschlag, Lagerung im Freien auf Erdwegen, der Witterung ausgesetzt) |

1. **Dauerfestigkeit** gegenüber den Normallastfällen
   Definition der Normallastfällen:
   - schlagartiges Einfüllen des Streugutes (z.B. aus Radladerschaufel), bei auf unebenem Boden stehendem Streugerät. Hierdurch ergeben sich durch Asymmetrien starke Torsionslasten und Wechselbiegelasten.
   - ruckhaftes Anheben des beladenen Gerätes. Punktlasten. Einleitung der Beschleunigungslasten über die Tragseile.
   - hochfrequente Vibration durch die Rütteleinrichtung, niederfrequente Vibration durch Unwuchten an der Streuscheibe (üblicherweise verwendeten Materialien neigen dadurch stark zur Rißbildung).
   - Landestoß, häufig entsprechend freiem Fall aus etwa einem Meter Höhe.
   - Umfallen des leeren Geräts.
2. **Weitgehende Unempfindlichkeit** gegenüber gelegentlich eintretenden Fällen wie:
   - heftiger Landestoß, entsprechend freiem Fall aus ca. zwei Metern Höhe.
   - Anschlagen des Geräts (beim Durchpendeln an den Tragseilen) an Radladerschaufel oder anderem festen Gegenstand bei angebrachtem Rammschutz.
   - Umfallen des befüllten Geräts bei angebrachtem Schutz des Tragringes.
3. Nahezu völlige **Wartungsfreiheit** bis auf
   - allgemeine Sichtkontrolle, insbesondere nach Ereignissen wie unter 2.
   - Kontrolle der Seilverspannungen
   - Kontrolle der Werferflügel der Streuscheibe (billiges Verschleißteil)
   - Kontrolle und Wartung des Verbrennungsmotors, bei Verwendung eines solchen Motors
4. Einfachste Reparaturmöglichkeit auch und gerade vor Ort
   - mit einfachsten Werkzeugen ohne besonderen Anforderungen an das Personal
   - einfachste Austauschmöglichkeiten von beschädigten Teilen durch konsequent modularen Aufbau
   - Verwendung von handelsüblichen und leicht zu beschaffenden Halbzeugen und Materialien.

Diese Forderungen werden von den Geräten gemäß dem Stand der Technik nur sehr unvollkommen erfüllt.

Der Erfindung liegt die Aufgabe zu Grunde, ein sehr leichtes, den in 1. oben geschilderten Beanspruchungen widerstehendes und einfach reparierbares Gerät zu schaffen. Diese Aufgabe wird durch die im Anspruch 1 angegebenen Merkmale gelöst. Die Unteransprüche beinhalten vorteilhafte Weiterbildungen.

Das erfindungsgemäße Gerät erfüllt diese harten Anforderungen. Hieraus ergeben sich immense wirtschaftliche Vorteile. Auch auf eine sich ergebende, erheblich verbesserte Ökobilanz (Applikationsleistung gegenüber Energieverbrauch) ist hinzuweisen.

Das Ausbringen des Streuguts wird nahezu ausschließlich je Gewichtseinheit bezahlt. In der Fliegerei ist das zu transportierende Gewicht (neben nicht zu beeinflussenden Faktoren wie Wetter und Flugentfernungen) der wichtigste limitierende Faktor.

Der ca. 12 % betragende Gewichtsvorteil (Bezugsgröße ist das Gesamtgewicht aus Streugerät und Streugut) bei dem erfindungsgemäßen Gerät soll hier als **direkter** wirtschaftlicher Vorteil anhand eines praktischen Beispieles mit absoluten Zahlen erklärt werden.

Bei einem in der Kalkung weitverbreitet eingesetzten Hubschrauber-Typ (AS 350) beträgt die Zuladung am Haken 900 Kp.
Die typischen Streusysteme für diese Maschine wiegen zwischen 170 Kp und 200 Kp. Bei Einsetzen des geringsten Wertes (170 Kp) kann die Maschine also netto 730 Kp an Streugut transportieren.
Eine übliche Jahresstreuleistung stellt die Ausbringung von ca. 25.000 Tonnen dar. Hierfür sind bei der Nettozuladung von 730 Kp mehr als 34.000 Flüge notwendig.
Ein Streugerät gemäß der Erfindung wiegt für diese Gesamtzuladung ca. 70 Kp, und dies bei Erfüllung aller im Forderungskatalog genannten Bedingungen.
34.000 Flüge, mit einem um 100 Kp leichteren System ergeben bei gleichem Mitteleinsatz (personell wie materiell) eine Mehrleistung von 3.400 Tonnen. Zur Zeit wird die Ausbringung einer Tonne mit ca. 70,00 DM bezahlt. Der direkte wirtschaftliche Vorteil beläuft sich somit etwa auf 238.000 DM pro Jahr. Dabei ist der zu erwartende Preis des Geräts annähernd identisch mit dem für das bisher verwendete System.

### Indirekte wirtschaftliche Vorteile:

Die Erfüllung der unter der Prämisse B im Forderungskatalog beschriebenen Bedingung ermöglicht:
Den offenen Streugutumschlag, die Lagerung auf Erdwegen, den Verzicht auf das Abdecken des Materials.

All diese Punkte sind bei Verwendung herkömmlicher Systeme sehr problematisch. Dies gilt insbesondere bei der Verwendung weicherdiger, feinstvermahlender Kalke. Häufig fließt dort das Material in solchen Fällen nicht gleichmäßig ab (es pulsiert), oder der Behälter verstopft gänzlich und muß mühsam entleert werden.
Wenn am Ende nur noch wenig Kalk übrig ist, führen Verunreinigungen sehr häufig zur Verstopfung. Man läßt deshalb zwangsläufig Reste liegen, was von der Auftraggeberseite nicht gerne gesehen wird und zu Abzügen führt. Man verzichtet auch zu Gunsten eines festeren Weges als Lagerplatz auf näher zur zu streuenden Waldfläche gelegene Plätze, und nimmt somit weitere Flugwege in Kauf.
Man ist häufig damit beschäftigt, den Kalk bei niederschlagreichem Wetter mit Planen abzudecken, vom Wind verwehte Planen einzusammeln, gestohlene Planen zu ersetzen etc.
Der ganze Ablauf, von der Kalkauswahl über den Umschlag bis hin zur Ausbringung ist reich an Reibung, wenn das Streugerät derartige Anforderungen an das Streugut stellt.
Diese logistischen Probleme sind mit dem erfindungsgemäßen Streusystem, welches mit diesen ungünstigen Bedingungen fertig wird, gelöst.

Die Erfüllung der im Anforderungskatalog unter **Dauerfestigkeit** bzw. **weitgehende Unempfindlichkeit** genannten Bedingungen resultieren in der Vermeidung von Standzeiten und der Entlastung des Piloten, der bei bis zu 300 Rotationen täglich, den Streubehälter nicht jedes Mal wie ein rohes Ei aufsetzen muß, um ihn nicht in kürzester Zeit zu zerstören.

Insgesamt wirkt es sich positiv und motivierend aus, wenn man bei einer recht harten Arbeit ein zweckentsprechendes Gerät zur Verfügung hat. Dies gilt umsomehr, wenn das Personal bei solchen Einsätzen zu einem erheblichen Teil über Tonnenprämie bezahlt wird.

Anhand der Zeichnung wird ein Ausführungsbeispiel der Erfindung näher erläutert. Es zeigen:
- Fig. 1: eine Seitenansicht des Gesamtgeräts
- Fig. 2: die Lagerung der Streuscheibe samt Motor
- Fig. 3: groß herausgezeichnet die Verankerung der Spannseile
- Fig. 4 und 5: unterschiedliche Verbindungsteile für die Beine mit dem Ring (Fig. 4) bzw. mit den Stützteilen (Fig. 5)
- Fig. 6: den Behälter mit einem besonders günstigen Verschluß
- Fig. 7: den Verschluß perspektivisch herausgezeichnet.
- Fig. 8a bis 8c: die Ausbildung der Streuscheibe
- Fig. 9, 10 und 11: die Ausgestaltung einer Streuscheibe, die gleichzeitig als Verschluß der Behälteröffnung dient

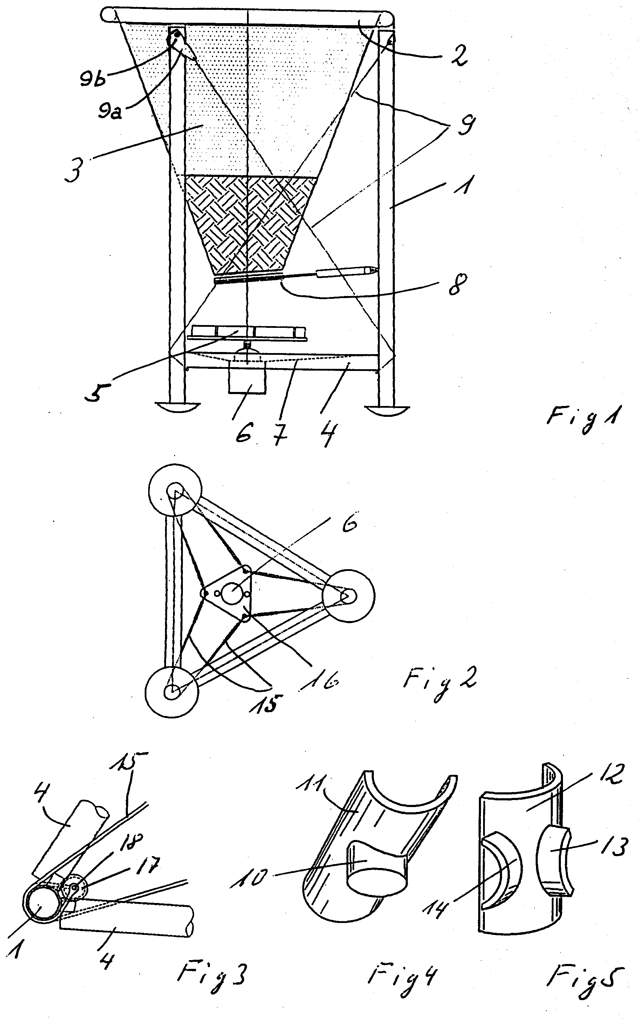

In Fig. 1 ist eine Seitenansicht des Geräts zu sehen. Es zeigt zwei der drei Beine 1 aus Alurohr (das dritte ist der Einfachheit halber weggelassen) einen Ring aus Alurohr 2, einen daran befestigten kegelabschnittförmigen Behälter 3, eines von drei Stützteilen 4 aus Alurohr, eine Streuscheibe 5 mit Antriebsmotor 6, eine in Fig. 1 nur angedeutete Aufhängung 7, schematisch einen Verschluß 8 für die Öffnung des Behälters sowie zwei von sechs Spannseilen 9.

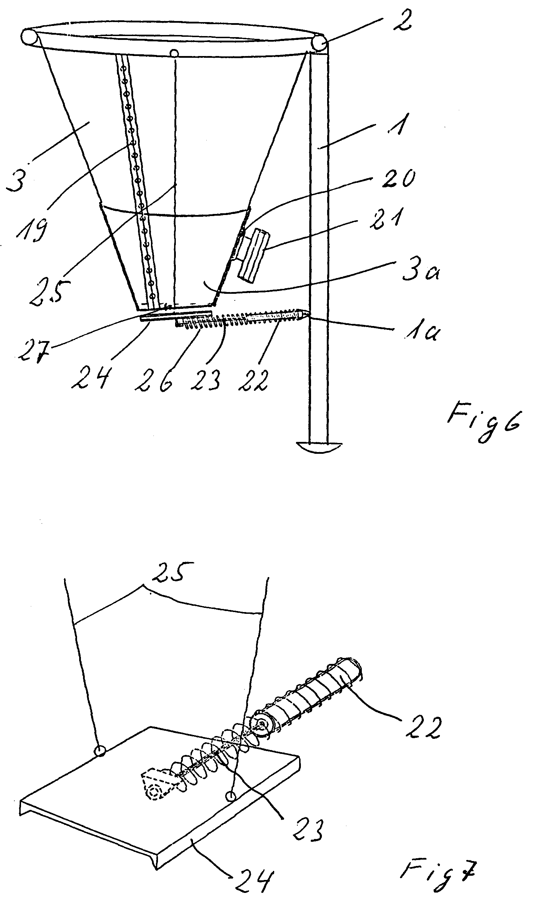

An den Verbindungsstellen des Rings 2 mit den Beinen 1 sind Verbindungsteile entsprechend Fig. 4 angebracht. Das Rohrteil 10 wird dabei in das obere Ende des Beins 1 eingeführt. Das dazu quer liegende Teil 11 liegt im montierten Zustand an dem Ring an und weist deshalb eine der Außenkontur des Rings 2 entsprechende Formung auf. Das Teil 11 wird vorzugsweise durch zwei Schellen mit dem Ring verbunden.
Zur Herstellung der Verbindung der Stützrohre mit den Beinen werden Verbindungsteile gemäß Fig. 5 verwendet. Es besteht aus einem der Außenkontur der Beine angepaßten Teil 12, das im montierten Zustand am Bein 1 anliegt und mit Schellen mit diesen verbunden sein kann. Die beiden am Teil 12 angesetzten Teile 13 und 14 sind so angeordnet und geformt, daß sie im montierten Zustand in die Stützrohre 4 hineinragen und an deren Innenwandung anliegen. Die Spannseile 9 sind oben mittels Laschen an je einem Bein 1 (oder direkt am Ring 2) befestigt und führen jeweils zum Verbindungspunkt des Nachbarbeins mit den Stützrohren. Sie sind oben jeweils über die Beine 1 geführt und pressen somit die Beine gegen je zwei Stützrohre 4. Die gespannten Spannseile verleihen der Konstruktion die für den rauhen Einsatz benötigte Stabilität. Die Spannseile können die Biegelasten und Biegemomente aufnehmen, ohne daß diese zerstörend auf die andern Teile des Geräts einwirken können. Sie können an den Verbindungspunkten der Stützrohre 4 mit den Beinen an den Stützrohren befestigt werden. Eine günstigere Ausbildung wird in Verbindung mit Fig. 3 später erläutert.

Fig. 2 zeigt die Lagerung bzw. Aufhängung der Streuscheibe 5 samt Antriebsmotor 6 und zwar von unten auf das Gerät gesehen (Scheibe 5 nicht gezeigt). Die Scheibe 5 mit dem Hydraulikmotor 6 ist auf einer Platte 16 montiert, die über sechs Spannseile 15 gehaltert wird. Die Spannseile 15 sind an den Verbindungsstellen der Beine 1 mit den Stützrohren befestigt und zwar vorzugsweise in der Art, wie in Fig. 3 erkennbar. Dort ist ein Bein 1 und Teile zweier Stützrohre 4 herausgezeichnet. Zwischen die Stützrohre 4 ist eine Gummirolle 17 angeordnet, deren Welle 18 über die Gummirolle beidseitig hinausragt. Die zu dem gezeigten Bein 1 führenden Spannseile 15 sind um das Bein 1 herumgeführt und mit dem unteren Ende der Welle 18 verbunden (eingehängt).

In gleicher Weise werden vorzugsweise auch die entsprechenden Spannseile 9 um das Bein 1 herumgeführt und ebenfalls mit den beiden Enden der Welle 18 verbunden. Auf das Gerät von außen einwirkende Kräfte (Biegungen, Torsionen) führen bei dieser Konstruktion durch die Einleitung dieser Kräfte über die Spannseile auf die Verbindungsstellen (Gelenke) dazu, daß die Verbindungsstellen der Teile stabilisiert werden. Durch die Gummirolle werden die Einwirkungen abgemildert (gedämpft).

In Fig. 6 ist der Behälter 3 herausgezeichnet. Er besteht aus ultrahochmolekularen Polyäthylen und ist aus mehreren miteinander vernietenen (19) Bahnen gebildet. Am oberen Ende ist er mit dem Ring 2 verbunden. Im unteren Bereich 3 a ist der Behälter durch eine mehrlagige Kohlefaserschicht verstärkt. Das Kohlefasergewebe wird auf die Behälteraußenwand aufgewickelt und mit Kunstharz getränkt (laminiert). Wegen der Nieten ist auch ein Loslösen der Schicht nach unten nicht möglich. An dem verstärkten Bereich können Befestigungsteile 20 eingelagert sein, an die z.B. ein Rüttler 21 angeschraubt sein kann. Die Eigenschaft des Kohlefaserlaminates (hohe Festigkeit und große Härte) wirkt sich vorteilhaft auf die Übertragung der durch den Rüttler erzeugten Vibration auf das Streugut aus.

Fig. 6 und 7 zeigen eine einfache aber sehr funktionstüchtige Möglichkeit für die Ausbildung des Verschlusses der Auslaßöffnung. Diese ist an einem Bein 1 in der Vertikalen schwenkbar gelagert (Punkt 1 a) und besteht aus einem Zylinder 22 mit einem Betätigungskolben samt Kolbenstange 23 und einer daran befestigten Verschlußplatte 24, die an zwei Lagerseilen 25 gelagert ist. Bei Betätigung des Kolbens durch Einsteuern von Hydraulikflüssigkeit schwenkt die Verschlußplatte 24 entgegen der Kraft einer Feder 26 vor die Öffnung des Behälters 3. Ohne Druckaufschlagung steht sie wegen der Wirkung der Feder 26 in der in Fig. 6 gezeigten Stellung. Wie gezeigt, sind die Lagerseile 25 an dem Ring 2 befestigt.
Wie aus Fig. 6 unschwer zu ersehen ist, beschreiben die durch die Seilenden 25 bestimmten Punkte und damit die Verschlußplatte 24 bei Betätigung des Zylinders 22 einen Kreisbogen. Um eine Kollision der Verschlußplatte mit der Behälteröffnung zu umgehen, ist diese Öffnung angeschrägt (Winkel 27). In der Grundstellung (Verschluß zu) bilden die Verschlußplatte 24 und Öffnung eine Linie.
An den Beinen des Streugeräts wird vorzugsweise eine Dämpfung vorgesehen. Vorzugsweise arbeiten diese Dämpfungen nach Art einer Luftpumpe: Bei Auftreffen der Beine auf dem Boden betätigen die Aufstandsflächen über eine Kolbenstange einen Kolben, wodurch dieser Kolben in einem Zylinder gegen die Kraft einer Feder und das zusammengepreßte Luftvolumen verschoben wird. Über eine einstellbare Drossel entweicht dann die zusammengepreßte Luft. Erst bei erneutem Aufnehmen des Behälters durch den Hubschrauber bringt die Feder den Kolben und damit die Aufstandsflächen wieder in die Ausgangsstellung.

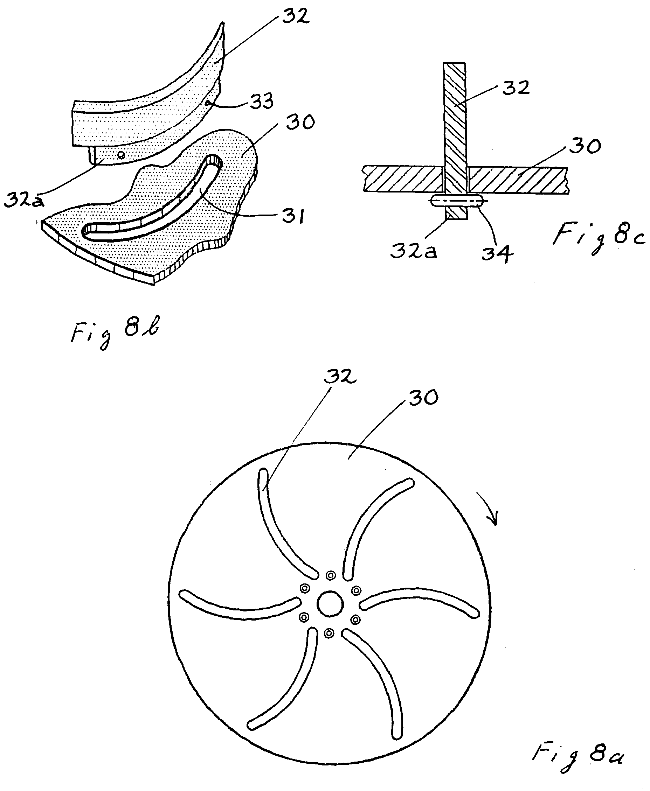

Bei der erfindungsgemäßen Ausbildung der Streuscheibe gemäß den Fig. 8a bis 8c sind die abgenutzten Streustege vor Ort leicht auswechselbar. Diese werden vorzugsweise aus einem Material gefertigt, das die Notwendigkeit des Auswechselns stark reduziert, d.h. einer geringen Abnutzung unterliegt. Das Scheibenteil der Streuscheibe nutzt zwar sehr viel weniger ab als die aufgesetzten Streuteile und kann somit ohne weiteres aus Metall gefertigt sein.
Trotzdem hat es sich als vorteilhaft erwiesen, auch das Scheibenteil selbst aus dem gleichen Werkstoff wie die Streuteile zu fertigen. Diese Ausbildung der Streuscheibe könnte auch bei anderen Streugeräten als dem der Fig. 1 bis 5 zur Anwendung kommen.
Die Fig. 8a zeigt eine Aufsicht auf die erfindungsgemäß ausgebildete Streuscheibe 5. Sie besteht aus einer Scheibe 30 z.B. aus Metall, vorzugsweise jedoch aus einem thermoplastischen Kunststoff insbesondere aus ultrahochmolekularem Polyäthylen und aus auf die Scheibe 30 aufgesetzten, im wesentlichen radial verlaufenden, geschwungenen Streustegen 32. Die Streuscheibe läuft im Betrieb in der durch einen Pfeil gezeigten Drehrichtung.
Vorzugsweise ist der geschwungene Verlauf der Stege so, daß der Radius der Biegung von innen nach außen gesehen kleiner wird.
Der Fig. 8b, die einen Ausschnitt der Streuscheibe 5 in noch nicht montiertem Zustand in perspektivischer Schicht zeigt, kann entnommen werden, daß die Scheibe 30 im wesentlichen radial verlaufende Aussparungen 31 aufweist und daß die Streustege 32 Teile 32a aufweisen, die in diese Aussparungen 31 passen (Unter dem Ausdruck radial verlaufende Aussparungen soll auch eine Ausbildung fallen, bei der die Aussparung 31 in zwei oder mehrere Teilaussparungen unterteilt ist und das Teil 32a entsprechend angepaßt ist.).
Den Fig. 8b und 8c, die einen Schnitt durch einen Teil der Streuscheibe zeigt, ist zu entnehmen, daß die Teile 32a Öffnungen 33 aufweisen, durch die Sicherungsstifte 34 zur Befestigung der Streustege gesteckt werden.

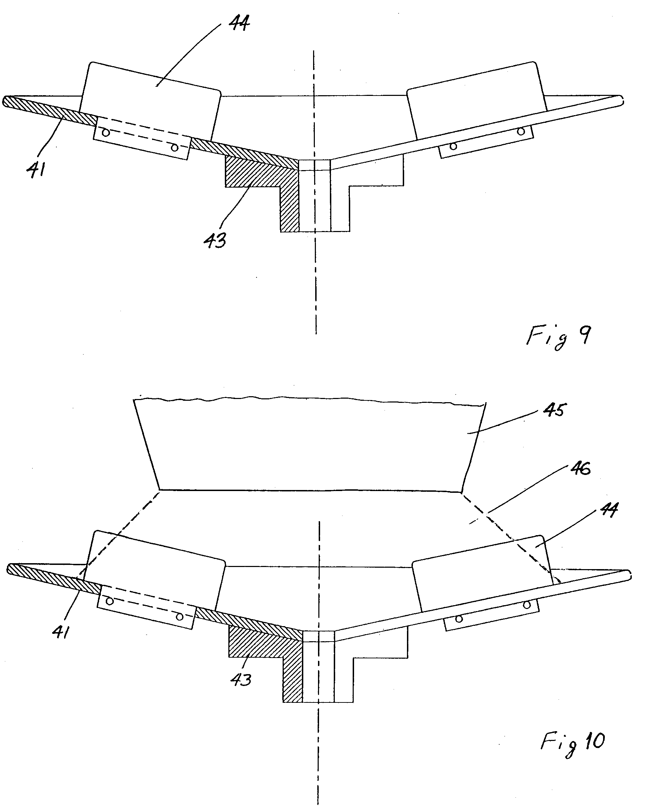

Durch die erfindungsgemäße Ausbildung der Streuscheibe gemäß den Fig. 9, 10 und 11 entfällt ein gesonderter Verschluß des Streubehälters komplett, was eine Verringerung des Preises, aber insbesondere des Gewichts des Streubehälters bedeutet. Diese Lösung ist selbst für den Fachmann überraschend. Diese Ausbildung der Streuscheibe kann auch bei anderen Streugeräten als dem der Fig. 1 bis 5 zur Anwendung kommen.

In Fig. 9 ist eine erfindungsgemäß ausgebildete Streuscheibe teilweise im Schnitt gezeigt. Sie besteht aus einem Körper 41, dessen Oberfläche die Form eines flachen (große Grundfläche, geringe Höhe) Kegelstumpfs aufweist. Im eingebauten Zustand ist der Körper 41, so wie gezeigt, also auf dem Kopf stehend mit dem darunter liegenden Antriebsmotor verbunden. Der Befestigung am Motor dient ein Flausch 43. Dem Körper 41 fehlt die Grundfläche, so daß er insgesamt eine etwa tellerförmige Form aufweist. Auf der Telleroberfläche sind Streustege 44 befestigt. Die Verbindung der Stege 44 mit dem Teller 41 kann so durchgeführt sein, wie anhand der Fig. 8 beschrieben und in der Fig. 9 angedeutet ist. Auch können die Streustege, aber auch der Teller, wie dort vorgeschlagen, aus thermoplastischem Kunststoff, insbesondere aus ultrahochmolekularem Polyäthylen bestehen.

In Fig. 10 ist die erfindungsgemäße, gerade nicht angetriebene Streuscheibe 41 mit ihren Streustegen 44 dem unteren Ende des Streubehälters 45 gegenüberstehend dargestellt. Aus dem Behälter ist Streugut ausgetreten, das einen Streugutkegel 46 (Schüttkegel) bildet. Der Abstand der Streuscheibe 41 zur Öffnung des Behälters 45 und der große Durchmesser des Tellers 41 sind so aufeinander abgestimmt, daß der Streukegel 46 nicht an den Rand des Tellers reicht. Auf jeden Fall muß der Durchmesser des Tellers deutlich größer als die Öffnung des Behälters sein. Andererseits darf der Abstand zwischen Teller 41 und Öffnung des Behälters 45 nicht sehr groß sein.

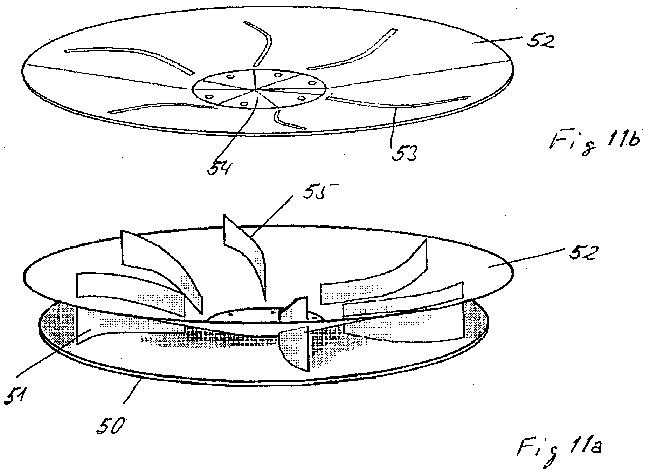

Beim Ausführungsbeispiel der Fig. 11a, das perspektivisch dargestellt ist, ist eine Grundscheibe 50 vorgesehen, auf der die Streustege 51 befestigt sind, z.B. so wie in Fig. 8 gezeigt. Über die Streustege 51 ist nun ein kegelstumpfartig ausgebildeter Körper (Teller) 52 mit zu den Streustegen korrespondierenden Aussparungen 53 gestülpt. Der Teller ist in Fig. 11b nochmals getrennt herausgezeichnet. Die Innenfläche 54 des Tellers liegt auf der Scheibe 50 auf und ist mit ihr verbunden.
Die Streustege müssen bei dieser Ausführungsform höher ausgebildet sein. Sie haben eine solche Form, daß deren Oberkanten 55 etwa parallel zur Telleroberfläche verlaufen.

Bei dieser Bauart stützt der Teller 52 die in der Grundscheibe 50 befestigten Streustege 51. Dies ist hilfreich, wenn im Streugut Steine, Klumpen und dgl. vorhanden sind.

## Patentansprüche

1. Von einem Hubschrauber mitzuführendes beim Aufsetzen des Geräts auf drei Beinen (1) stehendes Gerät zum Ausbringen von Streugut enthaltend einen sich nach unten verjüngenden Behälter (3) mit einer verschließbaren Öffnung am unteren Ende und eine Streuscheibe (5), die sich im Betrieb unterhalb der verschließbaren Öffnungen dreht, wobei der Behälter (3) am oberen Ende mit einem Ring (2) oder dgl. verbunden ist, wobei die Beine (1) mit ihrem oberen Ende lösbar mit dem Ring (2) verbunden sind, und wobei in der Nähe des unteren Endes der Beine (1) zwischen diesen verlaufende Stützteile (4) vorgesehen sind, mit denen die Beine (1) lösbar verbunden sind, dadurch gekennzeichnet, daß zwischen dem Ring (2) und den Stützteilen (4) Spannseile (9) wirksam sind, die jeweils zumindest in der Nähe eines Verbindungspunktes eines Beines (1) mit dem Ring (2) am Ring oder Bein befestigt sind und jeweils zu einem Verbindungspunkt eines Nachbarbeins (1) mit den Stützteilen (4) verlaufen und daß die Spannseile (9) am unteren Ende der Beine (1) über die Beine (1) geführt sind derart, daß die Beine (1) durch die Spannseile (9) gegen die Stützteile (4) gepreßt werden.

2. Gerät nach Anspruch 1, dadurch gekennzeichnet, daß jeweils an dem Verbindungspunkt eines Beins (1) mit seinen beiden Stützteilen (4) zwischen diesen Stützteilen (4) ein gummielastisches Teil (17) vorgesehen ist und daß jeweils die Enden der beiden an einem Verbindungspunkt endenden Spannseile (9) an diesem gummielastischen Teil (17) befestigt sind (Fig. 3).

3. Gerät nach Anspruch 2, dadurch gekennzeichnet, daß die gummielastischen Teile als Rolle (17) aus gummielastischen Material mit einer zentralen Welle (18) ausgebildet sind, daß diese Rollen (17) jeweils zwischen benachbarten Stützteilen (4) eingelegt sind, und daß jeweils die Enden der beiden Seile (9) mit der Welle (18) verbunden sind (Fig. 3).

4. Gerät nach einem der Ansprüche 1 oder 3, bei dem die Streuscheibe (5) mit ihrem Antriebsmotor (6) auf einer Trageplatte (16) befestigt ist, dadurch gekennzeichnet, daß diese Trageplatte (16) über je zwei zu den Verbindungspunkten der Beine (1) mit den Stützteilen (4) führende zusätzliche Spannseile (15) gehalten ist (Fig. 2).

5. Gerät nach Anspruch 3 und 4, dadurch gekennzeichnet, daß die zu einem Verbindungspunkt führenden zusätzlichen Spannseile (15) um das zugehörige Bein (1) herum geführt und mit der Welle der Rolle verbunden sind (Fig. 3).

6. Gerät nach einem der Ansprüche 1 bis 5, dadurch gekennzeichnet, daß der Ring (2), die Beine (1) und die Stützteile (4) aus hochfestem Leichtmetallrohr gefertigt sind.

7. Gerät nach Anspruch 6, dadurch gekennzeichnet, daß an den Verbindungsstellen der Beine (1) mit dem Ring (2) Verbindungsteile (10, 11) vorgesehen sind, von denen jedes ein in oder auf das Beinende passendes Rohrstück (10) aufweist, und daß jedes Verbindungsteil noch ein dazu quer liegendes Teil (11) aufweist, das am Ring (2) anliegt und eine einem Teil der Außenkontur des Rings (2) entsprechende Form aufweist (Fig. 4).

8. Gerät nach Anspruch 6 oder 7, dadurch gekennzeichnet, daß an den Verbindungsstellen der Beine (1) mit den Stützteilen (4) weitere Verbindungsteile (12 bis 14) vorgesehen sind, von denen jedes ein Teil (12) aufweist, das an dem zugehörigen Bein (1) anliegt und eine einem Teil der Außenkontur des Beins (1) entsprechende Form hat und zwei weitere Teile (13, 14) aufweist, die im montierten Zustand in die zugehörigen Stützteile (4) hineinragen und sich an einem Teil der Innenkontur der Stützteile (4) anlegen (Fig. 5).

9. Gerät insbesondere nach einem der Ansprüche 1 bis 8, dadurch gekennzeichnet, daß der Behälter aus thermoplastischem Kunststoff, insbesondere aus ultrahochmolekularem Polyäthylen besteht.

10. Gerät nach Anspruch 9, dadurch gekennzeichnet, daß die Außenfläche des Behälters zumindest teilweise durch eine Kohlefaser-Auflage verstärkt ist.

11. Gerät nach einem der Ansprüche 1 bis 10, dadurch gekennzeichnet, daß die Streuscheibe (5) aus einer Scheibe (30) mit im wesentlichen radial verlaufenden Aussparungen (31) und in diese Aussparungen (31) eingesetzte ebenfalls im wesentlichen radial verlaufenden Streustegen (32) besteht und daß diese Streustege (32) mit der Scheibe (30) lösbar verbunden ist.

12. Gerät nach Anspruch 11, dadurch gekennzeichnet, daß die Streustege (32) wenigstens teilweise über die Aussparungen (31) überstehen und auf der Unterseite der Scheibe (30) mittels durch Öffnungen (33) gesteckte Stifte (34) oder dergleichen gesichert sind.

13. Gerät nach Anspruch 11 oder 12, dadurch gekennzeichnet, daß die Streustege (32) aus einem thermoplastischen Kunststoff, insbesondere aus ultrahochmolekularem Polyäthylen bestehen.

14. Gerät nach Anspruch 13, dadurch gekennzeichnet, daß auch die Scheibe (30) aus einem thermoplastischen Kunststoff, insbesondere aus ultrahochmolekularem Polyäthylen besteht.

15. Gerät nach einem der Ansprüche 1 bis 14, dadurch gekennzeichnet, daß die Streuscheibe als Körper (41, 43) ausgebildet ist, der die Form eines flachen Tellers aufweist, auf dem die Streustege (44) befestigt sind, wobei der Teller der Öffnung des Behälters (46) symmetrisch (konzentrisch) gegenübersteht und wobei der Teller größer als die Öffnung des Behälters (45) ist und daß die stillstehende Streuscheibe als Verschluß des Behälters gegen das Austreten von Streugut dient.

16. Gerät nach Anspruch 15, dadurch gekennzeichnet, daß der Teller (41, 43) die Form der Oberfläche eines nach unten offenen flachen Kegels oder Kegelstumpfs aufweist.

17. Gerät nach Anspruch 15 oder 16, dadurch gekennzeichnet, daß der Teller (41, 43) (Kegel oder kegelstumpfartigen Körper) im wesentlichen radial verlaufende Aussparungen aufweist, daß in diese Aussparungen ebenfalls im wesentlichen radial verlaufenden Streustegen (44) eingesetzt sind, und daß diese Streustege (44) mit dem Teller (41, 43) lösbar verbunden sind.

18. Gerät nach einem der Ansprüche 15 bis 17, dadurch gekennzeichnet, daß von der Streuscheibe wenigstens die Streustege (44) aus einem thermoplastischen Kunststoff, insbesondere aus ultrahochmolekularem Polyäthylen bestehen.

19. Gerät nach einem der Ansprüche 15 bis 18, dadurch gekennzeichnet, daß die Streuscheibe eine Scheibe (50) mit im wesentlichen radial verlaufende Aussparungen und in diese Aussparungen eingesetzte ebenfalls im wesentlichen radial verlaufenden Streustege (51) aufweist, daß diese Streustege (51) mit der Scheibe lösbar verbunden sind und daß der Teller (kegel- oder kegelstumpfartige Körper) mit Aussparungen (53) versehen ist, und auf die Streustege aufgesteckt ist.

20. Gerät nach einem der Ansprüche 1 bis 14, dadurch gekennzeichnet, daß eine Verschlußplatte (24) für die Öffnung an zwei Seilen (25) aufgehängt ist, daß eine Vorrichtung (22, 23, 26) zum Erzeugen einer Linearbewegung einerseits mit der Verschlußplatte (24) starr und mit einem feststehenden Teil (1) des Geräts mittels eines wenigstens in der Vertikalen schwenkbaren Gelenks (Punkt 1 a) verbunden ist und daß die Ebene der Öffnung in einem solchen Winkel (27) zur Behälterachse steht, daß die Verschlußplatte (24) in der Verschlußstellung an der Öffnung anliegt.

21. Gerät nach Anspruch 20, dadurch gekennzeichnet, daß die Vorrichtung zum Erzeugen der Linearbewegung aus einem Betätigungszylinder (22) mit Betätigungsstange (23) und einer Rückholfeder (26) besteht.

22. Gerät nach Anspruch 20 oder 21, dadurch gekennzeichnet, daß die Seile (25) an einem Aufhängering (2) für den Behälter (3) befestigt sind.

23. Gerät nach einem der Ansprüche 20 bis 22, dadurch gekennzeichnet, daß das Gelenk an einem Bein (1) befestigt ist.
